# EUROPÄISCHE PATENTSCHRIFT

(11) **EP 1 081 683 B1**
(45) Veröffentlichungstag und Bekanntmachung des Hinweises auf die Patenterteilung: **24.06.2009**
(21) Anmeldenummer: 00202999.9
(22) Anmeldetag: 29.08.2000
(51) Int. Cl.: G10L 15/22

(54) **Verfahren und Anordnung zur Spracherkennung**
Speech recognition method and device
Méthode et dispositif de reconnaissance de la parole

(30) Priorität: 30.08.1999 DE 19941227
(43) Veröffentlichungstag der Anmeldung: 07.03.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Thelen, Eric, Philips Corporate Intell. Pty GmbH, 52064 Aachen (DE); Wutte, H., Philips Corporate Intell. Pty GmbH, 52064 Aachen (DE)
(74) Vertreter: Driver, Virginia Rozanne

(56) Entgegenhaltungen:
- EP-A- 0 896 467
- GB-A- 2 102 171
- US-A- 5 687 288
- PATENT ABSTRACTS OF JAPAN vol. 009, no. 086 (P-349), 16. April 1985 (1985-04-16) & JP 59 216242 A (TOSHIBA KK), 6. Dezember 1984 (1984-12-06)

## Beschreibung

Die Erfindung betrifft ein Verfahren und eine Anordnung zur Spracherkennung.

Für die Durchführung einer Spracherkennung ist es erforderlich, dass ein Benutzer entsprechende Sprachäußerungen einem Spracherkenner zuführt. Dabei gibt es mehrere Kriterien, die die Qualität des aus der Sprachäußerung erzeugten Erkennungsergebnisses beeinflussen. Häufig sind die Kriterien einem Benutzer einer derartigen Spracherkennungsanordnung nicht bewusst. Nur dem versierten Benutzer einer Spracherkennungsanordnung gelingt es, die Fehlerrate beim Erkennungsprozess so niedrig zu halten, dass ein akzeptables Resultat erzielt wird. Spracherkennungsanordnungen sind so weit entwickelt, dass auch unterschiedliche Sprecher Sprachäußerungen abgegeben können, die dann vom Spracherkennungssystem erkannt werden. Derartige Spracherkenner werden als sprecherunabhängige Spracherkennungssysteme bezeichnet.

In der WO 87/07460 wird ein telefonbasiertes Spracherkennungssystem beschrieben, bei dem einem Benutzer vom Spracherkenner mitgeteilt wird, dass kein passendes Wort aus dem Vokabular gefunden wurde. Der Benutzer wird aufgefordert, die Sprachäußerung zu wiederholen. Wenn dem Spracherkennungssystem eine zu leise oder gestörte Sprachäußerung zugeführt wird, wird der Benutzer vom Spracherkennungssystem aufgefordert, lauter ins Mikrophon zu sprechen.

Dass jedem Spracherkenner ein akustisches Modell zugrunde liegt, welches auf einer durchschnittlichen Sprechgeschwindigkeit basiert, wird jedoch nicht berücksichtigt. Ein Abweichen der Sprechgeschwindigkeit des Benutzers von der durchschnittlichen Sprechgeschwindigkeit des akustischen Modells erhöht die Fehlerrate beim Erkennungsprozess erheblich.

Aus der US-A-5687288 ist ein Spracherkenner bekannt, der zur besseren Erkennungsleistung das Sprachmodell in Abhängigkeit von der Sprechgeschwindigkeit ändert.

Der Erfindung liegt die Aufgabe zugrunde, ein Verfahren und eine Anordnung anzugeben, bei der die Fehlerrate beim Erkennungsprozess reduziert wird.

Die Aufgabe wird dadurch gelöst, dass eine Sprechgeschwindigkeitsmessung vorgenommen wird, die dem Benutzer mitgeteilt wird.

Um Spracherkennung vornehmen zu können, gibt ein Benutzer eine Sprachäußerung mit einer entsprechenden Geschwindigkeit ab. Für den Erkennungsprozess werden akustische Sprachmodelle verwendet, die von einer durchschnittlichen Geschwindigkeit ausgehen. Für ein abweichendes Sprechtempo ergibt sich die Notwendigkeit zur Anpassung. Bei kleineren Abweichungen der Sprechgeschwindigkeit von der durchschnittlichen Sprechgeschwindigkeit des akustischen Modells ist eine Anpassung möglich, führt aber zu einer schlechteren Bewertung von Hypothesen im Erkennungsprozess, durch die bei der Anpassung vorgenommene Zeitverzerrung. Bei größeren Abweichungen von der durchschnittlichen Sprechgeschwindigkeit ist eine Anpassung nicht mehr möglich, da die Modelle nicht mit beliebig hoher Geschwindigkeit durchlaufen werden können. Außerdem entsteht beim schnellen Sprechen bei den meisten Benutzern ein häufiges Verschlucken von kurzen Wörtern oder Wortendungen. Derartige Fehler kann das Spracherkennungssystem nicht zuverlässig erkennen. Während eine Anpassung in gewissem Maße möglich ist, ist ein Verhindern von Ausspracheunzulänglichkeiten bei der Vielzahl der möglichen Benutzer nur in Form einer Reduzierung der Ausspracheunzulänglichkeiten möglich. Die fehlenden oder nicht vollständig gesprochenen Wörter könnten allenfalls mit Methoden der Sprachmodellierung aus dem Zusammenhang erschlossen werden.

Deshalb wird die Sprechgeschwindigkeit des Benutzers gemessen und diese dem Benutzer über ein Ausgabemittel mitgeteilt. Der Benutzer wird dazu bewegt, eine möglichst optimale Sprechgeschwindigkeit, die sich an der durchschnittlichen Sprechgeschwindigkeit des Sprachmodells orientiert, einzuhalten. Als Ausgabemittel bieten sich beispielsweise LED's an, wobei eine entsprechende Farbe(Grün) eine akzeptable Sprechgeschwindigkeit anzeigt und eine andere Farbe (Rot) eine nicht akzeptable Abweichung anzeigt. Eine andere Möglichkeit ist die Anzeige eines Zahlenwertes, wobei dem Benutzer mitgeteilt werden muss, in welchem Bereich dieser Zahlenwert liegen muss. Bei einer ausschließlich audiobasierten Kommunikation wird dem Benutzer mittels einer Warnmeldung mitgeteilt, dass die Sprechgeschwindigkeit außerhalb eines akzeptablen Bereichs liegt.

Vorteilhafterweise wird dadurch eine geringere Fehlerrate beim Erkennungsprozess erzielt.

Die gemessene Sprechgeschwindigkeit kann vorteilhafterweise auch dem Spracherkenner als Konfidenzmaß oder zur Steuerung des Suchprozesses zugeführt werden. Dadurch wird dem Spracherkenner ein Maß mitgeteilt, mit dem der Spracherkenner entscheiden kann, ob die Sprechgeschwindigkeit innerhalb entsprechender Grenzen liegt oder ob beim Erkennungsprozess eine zu hohe Sprechgeschwindigkeit berücksichtigt werden muss. Gleiches gilt für eine zu niedrige Sprechgeschwindigkeit.

Die Sprechgeschwindigkeit wird anhand eines geeigneten Maßes während der Erkennung bestimmt. Ein Spracherkennungssystem muss bevor es eine Erkennung durchführen kann, trainiert werden. Deshalb ist es gerade wichtig, schon beim Training die Sprechgeschwindigkeit zu berücksichtigen und diese dem Benutzer mitzuteilen.

Ein Maß für die Sprechgeschwindigkeit stellt beispielsweise die Anzahl der gesprochenen und gegebenenfalls auch erkannten Wörter pro Zeiteinheit dar. Genauer ist jedoch die Messung der erkannten Phoneme pro Frame, wobei als Frame ein vorgegebenes Zeitintervall betrachtet wird.

Die Mitteilung, ob die Sprechgeschwindigkeit innerhalb des akzeptablen Bereichs liegt, kann an ein Überschreiten eines experimentell ermittelten Schwellwertes gebunden sein. Dadurch wird der Benutzer erst dann informiert, wenn die Sprechgeschwindigkeit zu hoch ist, so dass er nicht durch die Information -Sprechgeschwindigkeit liegt im akzeptablen Bereich- abgelenkt wird.

Der Schwellwert kann auch während des Erkennungsprozesses festgestellt werden, indem entsprechende Maße innerhalb des Erkennungsprozesses über- bzw. unterschritten werden.

Ein besonderer Vorteil dieser Erfindung ergibt sich aus dem Lernprozess, dem ein Benutzer unterzogen wird. Der Benutzer ist bemüht, eine hohe Effizienz bei der Benutzung eines Spracherkennungssystems zu erzielen. Demzufolge lernt er durch die Anzeige seiner Sprechgeschwindigkeit in bezug auf die durchschnittliche Sprechgeschwindigkeit des akustischen Modells seine Sprechgeschwindigkeit anzupassen und erzielt dadurch eine niedrige Fehlerrate.

Die Aufgabe der Erfindung wird auch durch eine Spracherkennungsanordnung gelöst, bei der eine Messeinheit eine Sprechgeschwindigkeit ermittelt und diese mittels einer Ausgabeeinheit dem Benutzer mitteilt.

Ein Ausführungsbeispiel der Erfindung wird im folgenden anhand der Zeichnung näher erläutert.

Die Figur zeigt eine erfindungsgemäße Spracherkennungsanordnung.

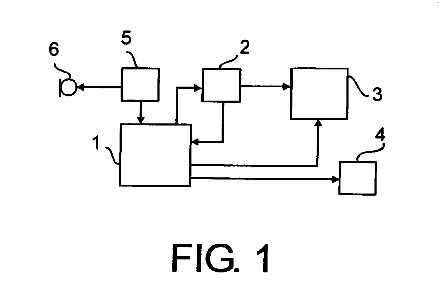

In der Figur 1 ist eine Spracherkennungsanordnung dargestellt. Die Sprachäußerungen werden vom einem Benutzer oder Sprecher abgegeben und einem Mikrofon 6 zugeführt. Diese analogen Sprachdaten werden einer Eingangseinheit 5 zugeführt, die eine Umwandlung der Sprachdaten in eine digitale Form vornimmt. Diese digitalen Sprachdaten werden dann dem Spracherkenner 1 zugeführt. Dort wird der Spracherkennungsprozess vorgenommen. Der Messeinheit 2 werden zur Ermittlung der Sprechgeschwindigkeit die erkannten Phoneme und/oder Wörter zugeführt. Anhand der erkannten Phoneme und/oder Wörter wird in der Messeinheit 2 die Sprechgeschwindigkeit ermittelt. Die Messeinheit 2 ist mit der Ausgabeeinheit 3 und dem Spracherkenner 1 verbunden. Die ermittelte Sprechgeschwindigkeit wird der Ausgabeeinheit 3 und gegebenenfalls dem Spracherkenner 1 übermittelt. Der Spracherkenner 1 übergibt das Erkennungsergebnis beispielsweise einer Schnittstelleneinheit 4 für ein Textverarbeitungsprogramm, welches die erkannten Wörter auf einem Monitor anzeigt.

Dem Spracherkenner 1 steht ein akustisches Modell zur Erzeugung des Erkennungsergebnisses zur Verfügung. Dieses akustische Modell basiert auf einer durchschnittlichen Sprechgeschwindigkeit. Diese durchschnittliche Sprechgeschwindigkeit wird entweder im Spracherkenner 1 mit der gemessenen Sprechgeschwindigkeit verglichen oder vom Spracherkenner 1 direkt der Ausgabeeinheit 3 zum direkten Vergleich mit der gemessenen Sprechgeschwindigkeit in der Ausgabeeinheit 3 zugeführt.

Für die Sprechgeschwindigkeitsmessung wird in der Messeinheit eine entsprechende Zeiteinheit zugrunde gelegt. Bei der Messung von Phonemen pro Zeiteinheit werden Phoneme pro Frame gezählt und bei Wörtern pro Zeiteinheit werden Wörter pro Sekunden gezählt. Die Art der Sprechgeschwindigkeitsmessung ergibt sich aus dem Anwendungsfall.

## Patentansprüche

1. Verfahren zur Spracherkennung mittels eines Spracherkennungssystems, wobei
eine Sprechgeschwindigkeitsmessung vorgenommen wird, **dadurch gekennzeichnet, dass** dem Sprecher mitgeteilt wird, ob die Sprechgeschwindigkeit innerhalb eines für das Spracherkennungssystem akzeptablen Bereichs liegt.

2. Verfahren nach Anspruch 1,
**dadurch gekennzeichnet,**
**dass** die ermittelte Sprechgeschwindigkeit dem Spracherkenner (1) zugeführt wird.

3. Verfahren nach Anspruch 1,
**dadurch gekennzeichet,**
**dass** die Sprechgeschwindigkeit mittels einer Messeinheit (2) während der Erkennung und/oder des Trainings ermittelt wird.

4. Verfahren nach Anspruch 1,
**dadurch gekennzeichnet,**
**dass** erkannte Phoneme und/oder Wörter pro vorgebbarem Zeitintervall gemessen werden.

5. Verfahren nach Anspruch 1,
**dadurch gekennzeichnet,**
**dass** die Sprechgeschwindigkeit in Abhängigkeit eines Schwellwertes angezeigt wird.

6. Verfahren nach Anspruch 5,
**dadurch gekennzeichnet,**
**dass** der Schwellwert in Abhängigkeit der Fehlerrate ermittelt wird.

7. Verfahren nach Anspruch 1,
**dadurch gekennzeichnet,**
**dass** die Sprechgeschwindigkeit dem Benutzer kontinuierlich angezeigt wird.

8. Spracherkennungsanordnung, mit einer Messeinheit (2) zur Ermittlung einer Sprechgeschwindigkeit **gekennzeichnet durch** eine Ausgabeeinheit (3) zur Mitteilung an den Sprecher, ob die Sprechgeschwindigkeit innerhalb eines für die Spracherkennungsanordnung akzeptablen Bereichs liegt.

9. Anordnung nach Anspruch 8,
**dadurch gekennzeichnet,**
**dass** die Ausgabeeinheit (3) mittels Farbanzeige einen Bereich der Sprechgeschwindigkeit anzeigt.

10. Anordnung nach Anspruch 8,
**dadurch gekennzeichnet,**
**dass** mittels einer Audioausgabe ein Überschreiten der Sprechgeschwindigkeit angezeigt wird.

## Claims

1. Method for speech recognition by means of a speech recognition system, wherein a speech velocity measurement is performed, **characterised in that** the speaker is informed whether the speech velocity lies within a range which is acceptable to the speech recognition system.

2. Method according to claim 1, **characterised in that** the determined speech velocity is fed to the speech recogniser (1).

3. Method according to claim 1, **characterised in that** the speech velocity is determined by means of a measuring unit (2) during the recognition and/or training.

4. Method according to claim 1, **characterised in that** recognised phonemes and/or words are measured per predefinable time interval.

5. Method according to claim 1, **characterised in that** the speech velocity is displayed as a function of a threshold value.

6. Method according to claim 5, **characterised in that** the threshold value is determined as a function of the error rate.

7. Method according to claim 1, **characterised in that** the speech velocity is continuously displayed to the user.

8. Speech recognition arrangement, comprising a measuring unit (2) for determining a speech velocity, **characterised by** an output unit (3) for informing the speaker whether the speech velocity lies within a range which is acceptable to the speech recognition arrangement.

9. Arrangement according to claim 8, **characterised in that** the output unit (3) displays a range of the speech velocity by means of a colour display.

10. Arrangement according to claim 8, **characterised in that** an exceeding of the speech velocity is indicated by means of an audio output.

## Revendications

1. Procédé de reconnaissance de la parole au moyen d'un système de reconnaissance de la parole, dans lequel on réalise une mesure de vitesse de la parole, **caractérisé en ce qu'**il est indiqué au locuteur si la vitesse de parole se situe dans un domaine acceptable pour le système de reconnaissance de la parole.

2. Procédé selon la revendication 1, **caractérisé en ce que** la vitesse de parole déterminée est fournie au détecteur de parole (1).

3. Procédé selon la revendication 1, **caractérisé en ce que** la vitesse de parole est déterminée à l'aide d'une unité de mesure (2) pendant la détection et/ou l'apprentissage.

4. Procédé selon la revendication 1, **caractérisé en ce que** les phonèmes et/ou mots reconnus sont mesurés sur un intervalle de temps prédéterminable.

5. Procédé selon la revendication 1, **caractérisé en ce que** la vitesse de parole est affichée en fonction d'une valeur de seuil.

6. Procédé selon la revendication 1, **caractérisé en ce que** la valeur de seuil est déterminée en fonction du taux d'erreur.

7. Procédé selon la revendication 1, **caractérisé en ce que** la vitesse de parole est affichée en continu à l'attention de l'utilisateur.

8. Agencement de reconnaissance de la parole avec une unité de mesure (2) destinée à déterminer une vitesse de parole, **caractérisé par** une unité de sortie (3) destinée à indiquer au locuteur si la vitesse de parole se situe dans un domaine acceptable pour l'agencement de reconnaissance de la parole.

9. Agencement selon la revendication 8, **caractérisé en ce que** l'unité de sortie (3) indique un domaine de vitesse de parole à l'aide d'un affichage coloré.

10. Agencement selon la revendication 8, **caractérisé en ce qu'**un dépassement de la vitesse de parole est indiqué par un signal sonore.
